# EUROPÄISCHE PATENTSCHRIFT

(11) **EP 0 499 804 B1**
(45) Veröffentlichungstag und Bekanntmachung des Hinweises auf die Patenterteilung: **02.08.1995**
(21) Anmeldenummer: 92100860.3
(22) Anmeldetag: 20.01.1992
(51) Int. Cl.: B60G 15/06, F16F 3/10

(54) **Abstützung für eine Schraubenfeder**
Support for a coil spring
Support pour un ressort hélicoidal

(30) Priorität: 16.02.1991 DE 4104859
(43) Veröffentlichungstag der Anmeldung: 26.08.1992
(73) Patentinhaber: Dr.Ing.h.c. F. Porsche Aktiengesellschaft, 70435 Stuttgart (DE)
(72) Erfinder: Wöhler, Hans-Jürgen, Dipl.-Ing., W-7000 Stuttgart 80 (DE)

(56) Entgegenhaltungen:
- EP-A- 0 046 508
- WO-A-89/05242
- DE-A- 3 620 774
- GB-A- 2 026 131
- US-A- 4 699 530
- US-A- 4 721 325
- REVUE TECHNIQUE AUTOMOBILE Bd. 30, Nr. 346, Juni 1975, Seite 58; 'SUSPENSION'

## Beschreibung

Die Erfindung bezieht sich auf eine Abstützung für eine Schraubenfeder nach dem Oberbegriff des Anspruchs 1.

Es sind Radaufhängungen für Federbeine bekannt (DE-A 35 32 681), die am Radführungslenker oder am Radträger abgestützt sind und eine koaxial angeordnete Schraubenfeder aufweisen. Diese ist in einem aufbauseitigen ersten elastischen Federteller (DE-A 29 42 135) und am Federbein in einem ortsfesten zweiten Federteller gehaften. Bei Ein- und Ausfederungsbewegungen des Fahrzeugrades verschwenkt sich das Federbein und somit auch der zweite Federteller, der hierdurch eine von der parallelen Stellung zum ersten Federteller veränderte schräge Position einnimmt. Dies bewirkt insbesondere bei Einfederungsbewegungen des Rades eine Ausbeulung der Schraubenfeder und eine hiermit verbundene Wirkungsschwächung sowie Windungsberührungen, die zu Geräuschen führen.

Aus der EP-A 0 046 508 sowie der WO 89/05242 ist eine Abstützung für eine Schraubenfeder eines am Fahrzeugaufbau gelagerten Federbeines bekannt, bei der der dem Aufbau zugerichtete Federteller unterschiedliche elastische Kennungen aufweist. Zur Erzielung dieser elastischen Kennung sind nach der EP-A 0 046 508 im elastischen Federteller Hohlräume eingearbeitet, um die Feder- und Dämpfungseigenschaften zu beeinflussen.

Aufgabe der Erfindung ist es, eine obenliegende Abstützung der annähernd koaxial zum Federbein angeordneten Schraubenleder in einem elastischen ersten Federteller zu schaffen, die eine Ausbeulung der Schraubenleder bei Ein- und Ausfederungsbewegungen weitestgehend verhindert.

Diese Aufgabe wird erfindungsgemäß durch die kennzeichnenden Merkmale des Anspruchs 1 gelöst. Weitere vorteilhatte Merkmale beinhalten die Unteransprüche.

Die mit der Erfindung hauptsächlich erzielten Vorteile bestehen darin, daß bei Ein- und Ausfederungsbewegungen des Federbeines sich trotz eines in der Position zum ersten obenliegenden Federteller sich verlagernden untenliegenden zweiten Federteller keine wesentliche Beulung der Schraubenfeder einstellt. Dies wird in vorteilhafter Weise durch einen in bestimmten Bereichen gezielt elastisch gehaltenen Federteller erreicht.

Diese Elastizität ist im Bereich relativ hoher Druckkräfte der Schraubenfeder vorgesehen, so daß die Feder quasi mit der ersten Windung parallel zum untenliegenden zweiten Federteller zu liegen kommt.

Die im Federteller vorgesehenen unterschiedlichen elastischen Kennungen werden in einfacher Weise durch Aussparungen im Federteller erzielt. Diese sind vorzugsweise in der Anlagefläche zum Fahrzeugaufbau und unterhalb der Schraubenwindung vorgesehen.

Die Aussparungen können aus schlitzartigen, taschenförmigen Einformungen bestehen, aber auch andere geometrische Formen, z.B. Kreisform oder ähnliche Formen aufweisen. Sie erstrecken sich vorzugsweise auf einer Kreisbahn und ihre Längsachsen sind radial verlaufend zum Zentrum des Federtellers angeordnet.

Zur exakten Fixierung der Schraubenfeder sind von der Innenbohrung ausgehend radiale Schlitze vorgesehen, die korrespondierend mit Köpfen von Befestigungsschrauben angeordnet sind und diese umgreifen.

Ein Ausführungsbeispiel der Erfindung ist in der Zeichnung dargestellt und wird im folgenden näher beschrieben.
Es zeigt
- Fig. 1: eine Ansicht eines Dämpferbeines mit einer koaxial angeordneten und an Federtellern abgestützten Schraubenfeder,
- Fig. 2: eine Ansicht des Dämpferbeines mit Schraubenfeder in eingefederter Position,

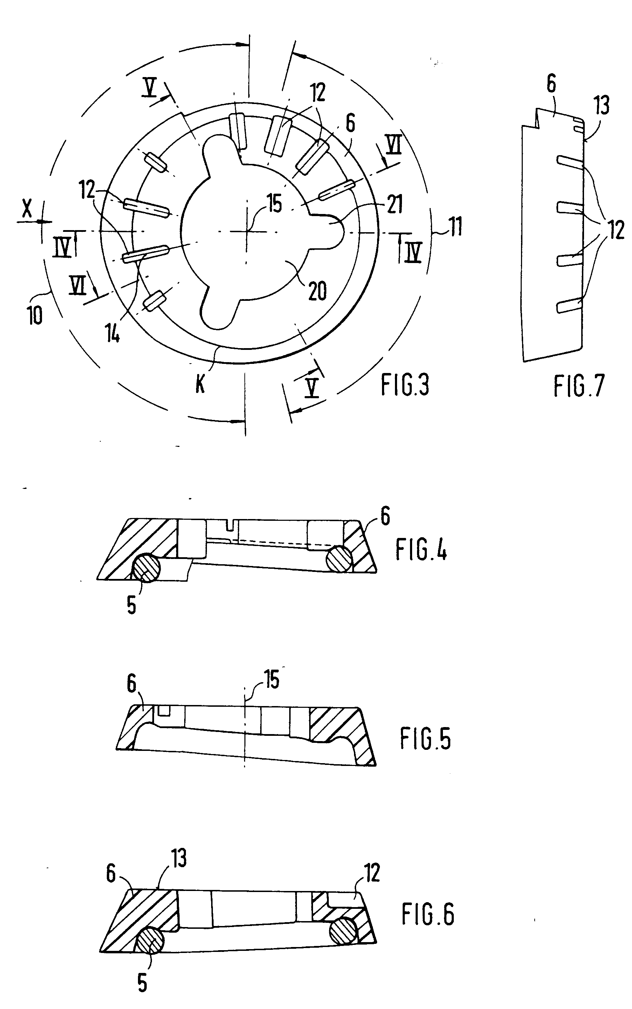

- Fig. 3: eine Draufsicht in Pfeilrichtung X, auf den obenliegenden Federteller gesehen,
- Fig. 4: einen Schnitt nach der Linie IV-IV durch den obenliegenden Federteller gemäß Fig. 3,
- Fig. 5: einen Schnitt nach der Linie V-V der Fig. 3,
- Fig. 6: einen Schnitt nach der Linie VI-VI der Fig. 3, und
- Fig. 7: eine Ansicht auf den Federteller in Pfeilrichtung X.

Ein Stoßdämpfer 1 umfasst im wesentlichen ein Federbein 2, das einerseits am Fahrzeugaufbau 3 in einem elastischen Element 4 kardanisch beweglich gehalten ist und andererseits mit seinem gegenüberliegenden Ende mit einem Radträger oder mit einem Radführungslenker verbunden ist. Das Federbein 2 umgebend ist eine Schraubenfeder 5 angeordnet, die in einem ersten obenliegenden elastischen Federteller 6 am Fahrzeugaufbau 4 und über einen am Federbein 2 befestigten zweiten Federteller 7 abgestützt ist.

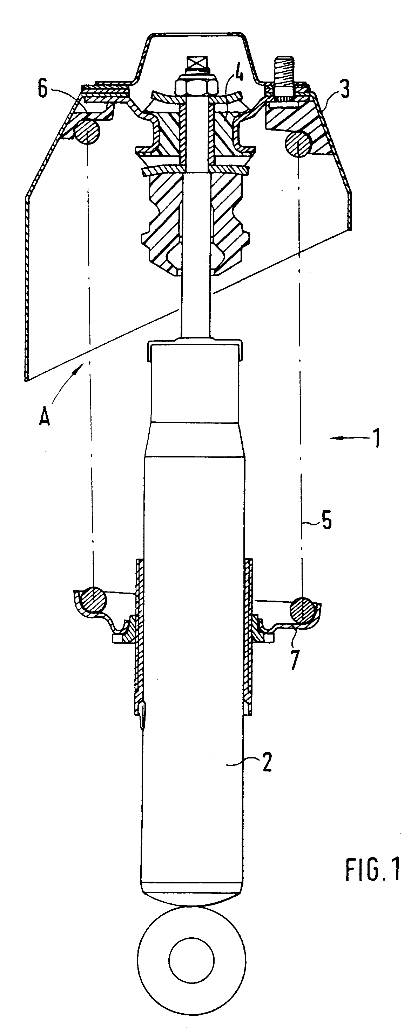

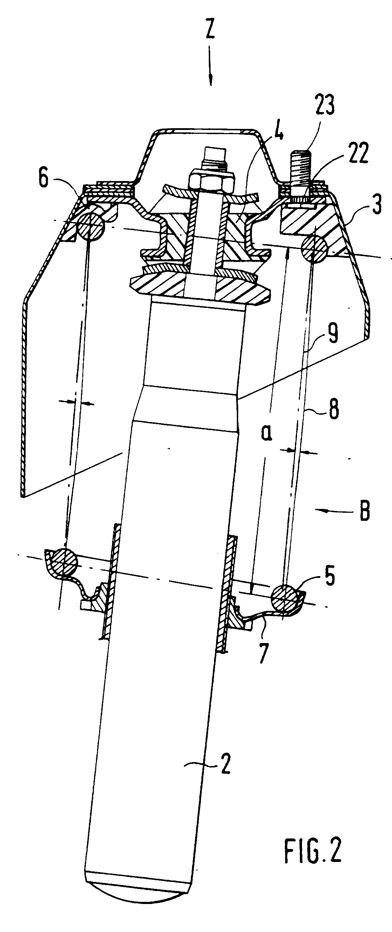

Wie in Fig. 1 näher zu erkennen ist, sind die beiden Federteller 6 und 7 in Ruheposition A annähernd parallel zueinander angeordnet. Bei einem Einfederungsvorgang (Position B) verstellt sich der untenliegende Federteller 7 zum obenliegenden Federteller 6 und die zwischen diesen Federtellern 6 und 7 eingespannte und zusammengedrückte Schraubenfeder 5 beult sich in Richtung des größeren axialen Abstandes a (Fig. 2) zwischen den Federtellern 6 und 7 aus, wie die Kontur 8 gegenüber der zylindrischen Kontur 9 der Schraubenfeder 5 zeigt und durch die Pfeile angedeutet ist.

Damit in etwa der Zustand paralleler Federteller 6 und 7 wieder herstellbar ist, wird der obenliegende Federteller 6 mit einem Bereich 10 größerer Elastizität als ein benachbarter Bereich 11 ausgeführt, d.h. der Bereich 10 ist in axialer Wirkrichtung der Schraubenfeder 5 weicher ausgebildet als der diametral gegenüberliegende Bereich 11.

Der obenliegende Federteller 6 weist den weicheren Bereich 10 an der Seite auf, an der die Schraubenfeder 5 höhere axiale Druckkräfte aufnimmt, damit diese Seite sich strecken kann und der Ausbeulung entgegengewirkt wird. Hierzu ist der Federteller 6 mit mehreren Ausnehmungen 12 versehen. Diese sind in der der Anlagefläche des Fahrzeugaufbaus 3 zugerichteten Fläche 13 des Federtellers 6 angeordnet.

Die Ausnehmungen 12 sind vorzugsweise schlitzartig ausgeführt und bilden sogenannte Taschen, die sich mit ihren Längsachsen 14 zum Zentrum 15 des Federtellers 7 erstrecken. Sie sind vorzugsweise beabstandet zueinander angeordnet und auf einer Kreisbahn K eingeformt.

Bei dem gezeigten Ausführungsbeispiel erstrecken sich die Ausnehmungen 12 über eine Fläche von ca. 180°. Diese Erstreckung kann kleiner, also unter 180°, aber auch größer, d.h. über 180° sein. Sie ist abhängig von den Gegebenheiten der Radaufhängung, d.h. von der Lage des untenliegenden Federtellers 7 zum obenliegenden Federteller 6 bei Ein- und Ausfederungsbewegungen und auch von dem Hub der Einfederungsbewegung des Stoßdämpfers 1.

Die Ausnehmungen 12 sind im Ausführungsbeispiel schlitzartig ausgeführt, es können auch andere geometrische Formen für diese Ausnehmungen gewählt werden.

Zur Lagefixierung des Federtellers 6 zur Schraubenfeder 5 weist dieser von der Aufnahmebohrung 20 radial nach außen geführte offene Schlitze 21 auf, die den Köpfen 22 von Befestigungsschrauben 23 gegenüberstehen und diese umfassen.

## Patentansprüche

1. Abstützung für eine Schraubenfeder (5) eines am Fahrzeugaufbau kardanisch gelagerten Federbeines (2) eines Kraftfahrzeugs, wobei die Schraubenfeder (5) einerseits aufbauseitig an einem obenliegenden elastischen Federteller (6) und andererseits über einen weiteren, am Federbein (2) ortsfest gehaltenen untenliegenden Federteller (7) abgestützt ist und der obenliegende Federteller (6) in axialer Wirkrichtung der Schraubenfeder (5) unterschiedliche elastische Kennungen aufweist, **dadurch gekennzeichnet**, daß die elastische Kennung des Federtellers (6) in einem Bereich (10) großer axialer Druckkräfte der eingefederten Schraubenfeder (5) geringer ist als in einem gegenüberliegenden Bereich (11) des Federtellers (6) kleinerer axialer Druckkräfte der eingefederten Schraubenfeder (5) und daß der elastische Federteller (6) im Bereich (10) großer axialer Druckkräfte und weicher elastischer Kennung in seiner der Aufbauwand (3) zugerichteten Fläche (13) mehrere Aussparungen (12) aufweist.

2. Abstützung nach Anspruch 1, **dadurch gekennzeichnet,** daß die Aussparungen (12) schlitzartig ausgeführt sind und sich zum Zentrum (15) des Federtellers hin (6) erstrecken.

3. Abstützung nach einem oder mehreren der vorhergehenden Ansprüche, **dadurch gekennzeichnet**, daß die Aussparungen (12) annähernd gleichmäßig beabstandet zueinander angeordnet sind und sich auf einer Kreisfläche von etwa 180° erstrecken.

4. Abstützung nach einem oder mehreren der vorhergehenden Ansprüche, **dadurch gekennzeichnet**, daß die Aussparungen (12) unmittelbar unterhalb der Aufnahme für eine Windung der Schraubenfeder (5) angeordnet sind.

5. Abstützung nach einem oder mehreren der vorhergehenden Ansprüche, **dadurch gekennzeichnet**, daß der Federteller (6) von seiner Aufnahmebohrung (20) aus radial verlaufende Fixierschlitze (21) aufweist.

## Claims

1. A support for a helical spring (5) of a telescopic leg (2) - mounted on gimbals on the vehicle body - of a motor vehicle, wherein the helical spring (5) is supported at one end on the body on a resilient spring plate (6) situated at the top and at the other end by way of a further spring plate (7) situated at the bottom and held immovably on the telescopic leg (2), and the spring plate (6) situated at the top has different resilient characteristics in the axial operative direction of the helical spring (5), **characterized in that** the resilient characteristic of the spring plate (6) is less in a region (10) of high axial compression forces of the compressed helical spring (5) than in an opposite region (11) of the spring plate (6) of lower axial compression forces of the compressed helical spring (5), and the resilient spring plate (6) in the region (10) of high axial compression forces and of weak resilient characteristics in the surface (13) facing the body wall (3) has a plurality of recesses (12).

2. A support according to Claim 1, **characterized in that** the recesses (12) are formed in the manner of slots and extend towards the centre (15) of the spring plate (6).

3. A support according to one or more of the preceding Claims, **characterized in that** the recesses (12) are arranged at a substantially uniform distance from one another and extend over a circular area of about 180°.

4. A support according to one or more of the preceding Claims, **characterized in that** the recesses (12) are arranged immediately below the receiving means for a coil of the helical spring (5).

5. A support according to one or more of the preceding Claims, **characterized in that** the spring plate (6) is provided with fixing slots (21) extending radially from the receiving bore (20) thereof.

## Revendications

1. Support pour un ressort hélicoïdal (5) d'une jambe de suspension (2) d'un véhicule automobile monté à la Cardan sur la structure de véhicule, le ressort hélicoïdal (5) étant soutenu d'une part côté châssis sur un plateau à ressort (6) élastique situé en position supérieure et d'autre part par l'intermédiaire d'un autre plateau à ressort (7) placé en position inférieure, maintenu localement fixe sur la jambe de suspension (2) et le plateau à ressort (6) supérieur présentant des caractéristiques élastiques différentes dans la direction fonctionnelle axiale du ressort hélicoïdal (5), caractérisé en ce que la caractéristique élastique du plateau à ressort (6) dans une zone (10) où les efforts de compression axial du ressort hélicoïdal (6) comprimé sont élevés est inférieure à celle manifesté dans une zone (11) opposée du plateau à ressort (6) où les efforts de compression axiale du ressort hélicoïdal (5) comprimé sont plus faibles, et en ce que le plateau à ressort (6) élastique présente, dans la zone (10) où les efforts de compression axial sont élevés et où la caractéristique élastique est plus souple, plusieurs évidements (12) ménagés dans sa face (13) tournée vers la paroi de structure (3).

2. Support selon la revendication 1, caractérisé en ce que les évidements (12) sont réalisés en fente et s'étendent en direction du centre (15) du plateau à ressort (6).

3. Support selon l'une ou plusieurs des revendications précédentes caractérisé en ce que les évidements (12) sont disposés suivant un espacement a peu près régulier et s'étendent sur une circonférence d'à peu près 180°.

4. Support selon l'une ou plusieurs des revendications précédentes, caractérisé en ce que les évidements (12) sont disposés directement au dessous du logement destiné à une spire du ressort hélicoïdal (5).

5. Support selon l'une ou plusieurs des revendications précédentes, caractérisé en ce que le plateau à ressort (6) présente des fentes de fixation (21) s'étendant radialement depuis son perçage de logement (20).
